(19) Europäisches Patentamt / European Patent Office / Office européen des brevets

(11) **EP 3 617 647 B1**

(12) **EUROPEAN PATENT SPECIFICATION**

(45) Date of publication and mention of the grant of the patent:
**15.06.2022 Bulletin 2022/24**

(21) Application number: **18791073.2**

(22) Date of filing: **27.04.2018**

(51) International Patent Classification (IPC):
**G01C 7/04** $^{(2006.01)}$      **B60W 40/06** $^{(2012.01)}$

(52) Cooperative Patent Classification (CPC):
**B60W 40/06; G01C 7/04**

(86) International application number:
**PCT/JP2018/017182**

(87) International publication number:
**WO 2018/199286 (01.11.2018 Gazette 2018/44)**

(54) **ROAD SURFACE PROFILE ESTIMATING DEVICE, ROAD SURFACE PROFILE ESTIMATING SYSTEM, ROAD SURFACE PROFILE ESTIMATING METHOD, AND ROAD SURFACE PROFILE ESTIMATING PROGRAM**

STRASSENOBERFLÄCHENPROFILSCHÄTZVORRICHTUNG, STRASSENOBERFLÄCHENPROFILSCHÄTZSYSTEM, STRASSENOBERFLÄCHENPROFILSCHÄTZVERFAHREN UND STRASSENOBERFLÄCHENPROFILSCHÄTZPROGRAMM

DISPOSITIF D'ESTIMATION DE PROFIL DE SURFACE DE ROUTE, SYSTÈME D'ESTIMATION DE PROFIL DE SURFACE DE ROUTE, PROCÉDÉ D'ESTIMATION DE PROFIL DE SURFACE DE ROUTE ET PROGRAMME D'ESTIMATION DE PROFIL DE SURFACE DE ROUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 JP 2017088700**

(43) Date of publication of application:
**04.03.2020 Bulletin 2020/10**

(73) Proprietor: **The University Of Tokyo**
**Tokyo 113-8654 (JP)**

(72) Inventors:
• **NAGAYAMA, Tomonori**
**Tokyo 113-8654 (JP)**
• **ZHAO, Boyu**
**Tokyo 113-8654 (JP)**
• **WANG, Haoqi**
**Tokyo 113-8654 (JP)**

(74) Representative: **Würmser, Julian**
**Meissner Bolte Patentanwälte**
**Rechtsanwälte Partnerschaft mbB**
**Postfach 86 06 24**
**81633 München (DE)**

(56) References cited:
**WO-A1-98/24977          JP-A- 2014 077 257**
**US-A1- 2012 197 588**

• **BOYU ZHAO ET AL: "IRI Estimation by the Frequency Domain Analysis of Vehicle Dynamic Responses and Its Large-scale Application", MOBILE AND UBIQUITOUS SYSTEMS: COMPUTING NETWORKING AND SERVICES, ACM, 2 PENN PLAZA, SUITE 701 NEW YORK NY 10121-0701 USA, 28 November 2016 (2016-11-28), pages 41-46, XP058307527, DOI: 10.1145/3004010.3004013 ISBN: 978-1-4503-4759-4**
• **JEONG, WEUIBONG ET AL.: 'State estimation of a road surface and vehicle system using a Kalman filter' TRANSACTIONS OF THE JAPAN SOCIETY OF MECHANICAL ENGINEERS vol. 55, no. 515, 1989, pages 1672 - 1679, XP055528307**

- **DOUANGPHACHANH, VIENGNAM ET AL.:
'Exploring the Use of Smartphone Accelerometer
and Gyroscope to Study on the Estimation of
Road Surface Roughness Condition' 2014 11TH
INTERNATIONAL CONFERENCE ON
INFORMATICS IN CONTROL, AUTOMATION AND
ROBOTICS 26 February 2015, pages 783 - 787,
XP032740344**

## Description

### Technical Field

The present invention relates to a road surface profile estimation device, a road surface profile estimation system, a road surface profile estimation method, and a road surface profile estimation program.

### Background Art

Conventionally, in order to evaluate the longitudinal shape (referred to hereafter as the road surface profile) of a road surface, unevenness on the road surface may be measured, and an index such as an IRI (International Roughness Index), for example, may be calculated. Information relating to the road surface profile may be used to determine whether the road surface requires maintenance and evaluate the comfort level when traveling by vehicle.

Patent Publication JP-A-2017-040486 describes a measurement device that determines a travel distance and a vertical direction displacement of a bicycle on the basis of data measured by a speed sensor, an acceleration sensor, and an angular velocity sensor mounted on the bicycle, and determines the road surface profile of a bicycle path by either associating the travel distance and an acceleration-based vertical direction displacement with each other or combining the acceleration-based vertical direction displacement with an angular velocity-based vertical direction displacement and associating the resulting combination with the travel distance.

Patent Application WO 98/24977 A1 aims to disclose a posture vertical motion sensor, a road-to-car distance sensor, and an arithmetic unit mounted on a vehicle. A vertical section profile is obtained from the distance to the road face measured with the distance sensor and the pitch angle, the roll angle, and the displacement in vertical direction of the vehicle measured with posture vertical motion sensor.

Journal article *"IRI Estimation by the Frequency Domain Analysis of Vehicle Dynamic Responses and Its Large-scale Application"*, Mobiquitous '16 Adjunct Proceedings from November 2016 aims to disclose an improved smartphone based Dynamic Response Intelligent Monitoring System (iDRIMS) by employing frequency domain analysis. The improved algorithm for International Roughness Index (IRI) estimation consists of two steps. At first. a Half-Car (HC) model, which can reproduce both vehicle bouncing and pitching motions and represent sensor installation location in the longitudinal direction, is selected as the vehicle numerical model and identified. The vehicle parameters are identified through a drive tests over a portable hump with a known size. As opposed to previous approach of parameter identification in the time domain using Kalman filter, the parameters are optimized to minimize the difference between simulation and measured hump responses in the frequency domain using Genetic algorithm (GA). Then, IRI is estimated by measuring vertical acceleration responses of ordinary vehicles. Measured acceleration is converted to the acceleration RMS of the sprung mass of standard quarter car by multiplying a transfer function. The transfer function, estimated through the simulation of the identified HC model as opposed to QC model in previous approaches, reflects the vehicle pitching motions and sensor installation location. The RMS is further converted to IRI based on correlation between these values.

### Summary

Technical Problem

A road surface profile may be estimated using a dedicated vehicle equipped with a high-precision laser distance meter. However, a dedicated vehicle for estimating a road surface profile is expensive, and operators capable of using the vehicle are limited. Moreover, a dedicated vehicle for estimating a road surface profile may be designed for the purpose of estimating the road surface profile of an expressway and may not always be suitable for estimating the road surface profile of a general road.

Meanwhile, a road surface profile may be estimated by mounting a simple sensor on a general-purpose vehicle, but in this case, it may not be possible to acquire sufficient precision.

Hence, the present invention provides a road surface profile estimation device, a road surface profile estimation system, a road surface profile estimation method, and a road surface profile estimation program with which any road surface profile, including that of a general road, can be estimated with a high degree of precision using a general-purpose vehicle.

Solution to Problem

A road surface profile estimation device according to one aspect of the present invention includes an acquisition unit that acquires a vertical acceleration relative to a road surface with which a vehicle is in contact and angular velocity about a pitch axis of the vehicle, a first calculation unit that calculates a vertical displacement by integrating the acceleration and calculates an angular displacement about the pitch axis by integrating the angular velocity, a prediction unit that predicts, on the basis of a simulation model, a time evolution of state variables including variables expressing unevenness on a road surface along which the vehicle is traveling, variables expressing up-down motion of the vehicle, and variables expressing rotary motion about the pitch axis of the vehicle, a second calculation unit that calculates, on the basis of an observation model, the acceleration, the angular velocity, the displacement, and the angular displacement from the state variables predicted by the prediction unit, an updating unit that updates the state variables by data-assimilating the acceleration and the angular velocity acquired by the acquisition unit and the displacement and the angular displacement calculated by the first calculation unit with the acceleration, the angular velocity, the displacement, and the angular displacement calculated by the second calculation unit, and an estimation unit that estimates the road surface profile on the basis of the variables expressing the unevenness of the road surface, included in the state variables.

According to this aspect, by employing in data assimilation not only the vertical acceleration relative to the road surface with which the vehicle is in contact and the angular velocity about the pitch axis of the vehicle but also the vertical displacement and the angular displacement about the pitch axis, highly stable analysis can be realized, and as a result, the profile of any road surface, including that of a general road, can be estimated with a high degree of precision using a general-purpose vehicle.

The aspect described above may further include a smoothing unit that smooths the state variables on the basis of the acceleration and the angular velocity acquired by the acquisition unit and the displacement and the angular displacement calculated by the first calculation unit following a point at which the prediction unit executes prediction.

According to this aspect, by employing in data smoothing not only the vertical acceleration of the vehicle and the angular velocity about the pitch axis of the vehicle but also the vertical displacement and the angular displacement about the pitch axis, the road surface profile can be estimated with an even higher degree of precision.

In the aspect described above, the simulation model may be a half car model of the vehicle, and the state variables may be variables expressing states of the half car model.

According to this aspect, the operating state of the vehicle can be expressed more accurately than when a quarter car model is used as the simulation model, and as a result, the time evolution of the state variables can be predicted with a higher degree of precision.

In the aspect described above, the variables expressing the unevenness of the road surface may include a vertical displacement and a vertical speed of a front tire of the half car model, and a vertical displacement and a vertical speed of a rear tire of the half car model, the variables expressing the up-down motion of the vehicle may include a vertical displacement and a vertical speed of a center of gravity of the half car model, a vertical displacement and a vertical speed of a front suspension of the half car model, and a vertical displacement and a vertical speed of a rear suspension of the half car model, and the variables expressing the rotary motion about the pitch axis of the vehicle may include an angle of rotation and an angular velocity about a pitch axis passing through the center of gravity of the half car model.

In the aspect described above, the simulation model may be a model expressing the time evolution of the state variables by a linear transformation or a non-linear transformation of the state variables and Gaussian noise or non-Gaussian noise, and the observation model may be a model for calculating the acceleration, the angular velocity, the displacement, and the angular displacement using a linear transformation or a non-linear transformation of the state variables and Gaussian noise or non-Gaussian noise.

According to this aspect, by expressing the time evolution of the state variables using a simulation model that includes a non-linear transformation and non-Gaussian noise and expressing observation using an observation model that includes a non-linear transformation and non-Gaussian noise, non-linear behavior and non-Gaussian vibration can be described accurately, and as a result, the road surface profile can be estimated with an even higher degree of precision.

In the aspect described above, the simulation model may be a model expressing the time evolution of the state variables by a linear transformation of the state variables and Gaussian noise, the observation model may be a model for calculating the acceleration, the angular velocity, the displacement, and the angular displacement using a linear transformation of the state variables and Gaussian noise, and the updating unit may update the state variables so as to minimize a square error of the state variables.

According to this aspect, by expressing the time evolution of the state variables using a simulation model that includes a linear transformation and Gaussian noise and expressing observation using an observation model that includes a linear transformation and Gaussian noise, the road surface profile can be estimated by comparatively low-load calculation.

A road surface profile estimation system according to another aspect of the present invention includes an accelerometer disposed in a vehicle in order to measure a vertical acceleration relative to a road surface with which the vehicle is in contact, an angular velocity meter disposed in the vehicle in order to measure an angular velocity about a pitch axis of the vehicle, and a road surface profile estimation device for estimating a profile of a road surface along which the vehicle is traveling, the road surface profile estimation device including an acquisition unit that acquires the acceleration from the accelerometer and the angular velocity from the angular velocity meter, a first calculation unit that calculates a vertical displacement by integrating the acceleration and calculates an angular displacement about the pitch axis by integrating the angular velocity, a prediction unit that predicts, on the basis of a simulation model, a time evolution of state variables including variables expressing unevenness on the road surface along which the vehicle is traveling, variables expressing up-down motion of the vehicle, and variables expressing rotary motion about the pitch axis of the vehicle, a second calculation unit that calculates, on the basis of an observation model, the acceleration, the angular velocity, the displacement, and the angular displacement from the state variables predicted by the prediction unit, an updating unit that updates the state variables by data-assimilating the acceleration and the angular velocity acquired by the acquisition unit and the displacement and the angular displacement calculated by the first calculation unit with the acceleration, the angular velocity, the displacement, and the angular displacement calculated by the second calculation unit, and an estimation unit that estimates the road surface profile on the basis of the variables expressing the unevenness of the road surface, included in the state variables.

According to this aspect, by employing in data assimilation not only the vertical acceleration relative to the road surface with which the vehicle is in contact and the angular velocity about the pitch axis of the vehicle but also the vertical displacement and the angular displacement about the pitch axis, highly stable analysis can be realized, and as a result, the profile of any road surface, including that of a general road, can be estimated with a high degree of precision using a general-purpose vehicle.

A method of estimating a road surface profile according to a further aspect of the present invention includes a first step of acquiring a vertical acceleration relative to a road surface with which a vehicle is in contact and angular velocity about a pitch axis of the vehicle, a second step of calculating a vertical displacement by integrating the acceleration and calculating an angular displacement about the pitch axis by integrating the angular velocity, a third step of predicting, on the basis of a simulation model, a time evolution of state variables including variables expressing unevenness on a road surface along which the vehicle is traveling, variables expressing up-down motion of the vehicle, and variables expressing rotary motion about the pitch axis of the vehicle, a fourth step of calculating, on the basis of an observation model, the acceleration, the angular velocity, the displacement, and the angular displacement from the state variables predicted in the third step, a fifth step of updating the state variables by data-assimilating the acceleration and the angular velocity acquired in the first step and the displacement and the angular displacement calculated in the second step with the acceleration, the angular velocity, the displacement, and the angular displacement calculated in the fourth step, and a sixth step of estimating the road surface profile on the basis of the variables expressing the unevenness of the road surface, included in the state variables.

According to this aspect, by employing in data assimilation not only the vertical acceleration relative to the road surface with which the vehicle is in contact and the angular velocity about the pitch axis of the vehicle but also the vertical displacement and the angular displacement about the pitch axis, highly stable analysis can be realized, and as a result, the profile of any road surface, including that of a general road, can be estimated with a high degree of precision using a general-purpose vehicle.

A road surface profile estimation program according to a further aspect of the present invention causes a computer provided in a road surface profile estimation device to function as an acquisition unit that acquires a vertical acceleration relative to a road surface with which a vehicle is in contact and angular velocity about a pitch axis of the vehicle, a first calculation unit that calculates a vertical displacement by integrating the acceleration and calculates an angular displacement about the pitch axis by integrating the angular velocity, a prediction unit that predicts, on the basis of a simulation model, a time evolution of state variables including variables expressing unevenness on a road surface along which the vehicle is traveling, variables expressing up-down motion of the vehicle, and variables expressing rotary motion about the pitch axis of the vehicle, a second calculation unit that calculates, on the basis of an observation model, the acceleration, the angular velocity, the displacement, and the angular displacement from the state variables predicted by the prediction unit, an updating unit that updates the state variables by data-assimilating the acceleration and the angular velocity acquired by the acquisition unit and the displacement and the angular displacement calculated by the first calculation unit with the acceleration, the angular velocity, the displacement, and the angular displacement calculated by the second calculation unit, and an estimation unit that estimates the road surface profile on the basis of the variables expressing the unevenness of the road surface, included in the state variables.

According to this aspect, by employing in data assimilation not only the vertical acceleration relative to the road surface with which the vehicle is in contact and the angular velocity about the pitch axis of the vehicle but also the vertical displacement and the angular displacement about the pitch axis, highly stable analysis can be realized, and as a result, the profile of any road surface, including that of a general road, can be estimated with a high degree of precision using a general-purpose vehicle.

Advantageous Effects of Invention

According to the present invention, it is possible to provide a road surface profile estimation device, a road surface profile estimation system, a road surface profile estimation method, and a road surface profile estimation program with which any road surface profile, including that of a general road, can be estimated with a high degree of precision using a general-purpose vehicle.

**Brief Description of Drawings**

Fig. 1 is a schematic view of a road surface profile estimation system according to a first embodiment of the present invention.

Fig. 2 is a function block diagram of a road surface profile estimation device according to the first embodiment of the present invention.

Fig. 3 is a conceptual diagram of a simulation model used by the road surface profile estimation device according to the first embodiment of the present invention.

Fig. 4 is a flowchart of first processing executed by the road surface profile estimation device according to the first embodiment of the present invention.

Fig. 5 is a flowchart of second processing executed by the road surface profile estimation device according to the first embodiment of the present invention.

Fig. 6 is a first graph showing a relationship between a travel distance and a road surface profile, estimated by the road surface profile estimation system according to the first embodiment of the present invention.

Fig. 7 is a second graph showing the relationship between the travel distance and the road surface profile, estimated by the road surface profile estimation system according to the first embodiment of the present invention.

Fig. 8 is a third graph showing the relationship between the travel distance and the road surface profile, estimated by the road surface profile estimation system according to the first embodiment of the present invention.

Fig. 9 is a fourth graph showing a power spectrum of the road surface profile estimated by the road surface profile estimation system according to the first embodiment of the present invention.

Fig. 10 is a fifth graph showing the travel distance and the speed of a vehicle during estimation of the road surface profile by the road surface profile estimation system according to the first embodiment of the present invention.

Fig. 11 is a sixth graph showing the travel distance and the speed of the vehicle during estimation of the road surface profile by the road surface profile estimation system according to the first embodiment of the present invention.

Fig. 12 is a flowchart of third processing executed by a road surface profile estimation device according to a second embodiment of the present invention.

**Description of Embodiments**

Embodiments of the present invention will be described below with reference to the attached figures. Note that in the figures, components with identical reference numerals have identical or similar configurations.

[First Embodiment]

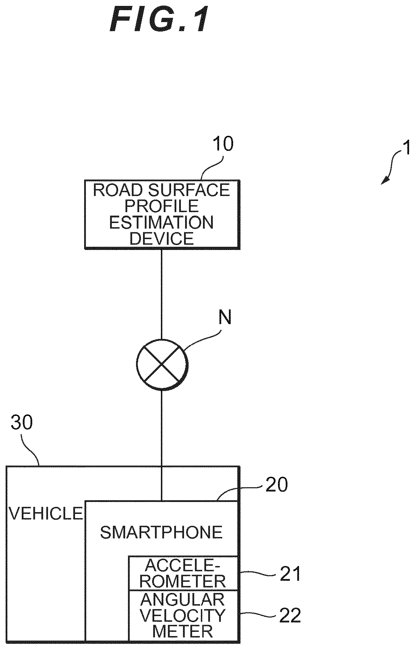

Fig. 1 is a schematic view of a road surface profile estimation system 1 according to a first embodiment of the present invention. The road surface profile estimation system 1 includes a vehicle 30, an accelerometer 21 that measures vertical acceleration relative to a road surface with which the vehicle 30 is in contact, an angular velocity meter 22 that measures angular velocity about a pitch axis of the vehicle 30, and a road surface profile estimation device 10 that estimates the profile of the road surface along which the vehicle 30 is traveling. In the road surface profile estimation system 1 according to this embodiment, the accelerometer 21 and the angular velocity meter 22 are built into a smartphone 20. The smartphone 20 may be disposed in any desired location, such as on the dashboard or in the trunk of the vehicle 30. Needless to mention, the accelerometer 21 and the angular velocity meter 22 may also be disposed in the vehicle 30 independently. The accelerometer 21 measures vertical acceleration relative to the road surface with which the vehicle 30 is in contact, but does not necessarily have to measure only vertical acceleration and may also measure horizontal acceleration relative to the road surface. Of the plurality of components of the acceleration of the vehicle 30, the accelerometer 21 is to measure at least the vertical component relative to the road surface. The angular velocity meter 22 measures angular velocity about the pitch axis of the vehicle 30 but does not necessarily have to measure only the angular velocity about the pitch axis and may also measure angular velocity about a roll axis and angular velocity about a yaw axis of the vehicle 30. Of the angular velocities relative to the plurality of axes of the vehicle 30, the angular velocity meter 22 is to measure at least the angular velocity about the pitch axis.

The road surface profile estimation device 10 estimates the profile of the road surface along which the vehicle 30 is traveling on the basis of the acceleration and angular velocity measured by the accelerometer 21 and the angular velocity meter 22, and so on. In the road surface profile estimation system 1 according to this embodiment, the road surface profile estimation device 10 is connected to the smartphone 20 over a communication network N. Here, the communication network N may be a wired or wireless communication network. Note that the road surface profile estimation device 10 does not necessarily have to be independent of the smartphone 20 and may be formed integrally with the smartphone 20. In this case, the smartphone 20 may be caused to function as the road surface profile estimation device 10 by executing a road surface profile estimation program installed in the smartphone 20.

The vehicle 30 may be an automobile that travels along a road surface on the tires of four wheels. Needless to mention, the vehicle 30 may also be a three-wheel or two-wheel vehicle and may also have five or more wheels. An automobile of any size may be used as the vehicle 30, and in this specification, cases in which a light vehicle (Light), a small vehicle (Small), and a middle-sized vehicle (Middle) are used as the vehicle 30 will be described.

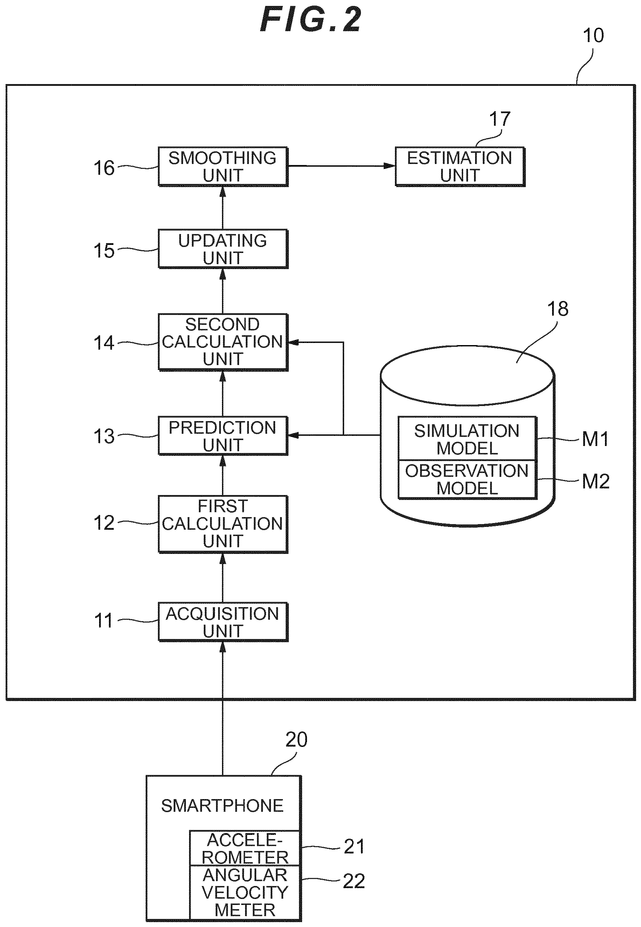

Fig. 2 is a function block diagram of the road surface profile estimation device 10 according to the first embodiment of the present invention. The road surface profile estimation device 10 includes an acquisition unit 11, a first calculation unit 12, a prediction unit 13, a second calculation unit 14, an updating unit 15, a smoothing unit 16, an estimation unit 17, and a storage unit 18.

The acquisition unit 11 acquires the vertical acceleration relative to the road surface with which the vehicle 30 is in contact and the angular velocity about the pitch axis of the vehicle 30. The acquisition unit 11 may acquire the acceleration and the angular velocity from the accelerometer 21 and the angular velocity meter 22 built into the smartphone 20 by communicating with the smartphone 20.

The first calculation unit 12 calculates a vertical displacement by integrating the acceleration and calculates an angular displacement about the pitch axis by integrating the angular velocity. The first calculation unit 12 calculates the vertical displacement by executing second order integration relative to time on the acceleration acquired by the acquisition unit 11. Further, the first calculation unit 12 calculates the angular displacement about the pitch axis by executing first order integration relative to time on the angular velocity acquired by the acquisition unit 11.

The prediction unit 13 predicts the time evolution of state variables including variables expressing unevenness on the road surface along which the vehicle 30 is traveling, variable expressing up-down motion of the vehicle 30, and variables expressing rotary motion of the vehicle 30 about the pitch axis on the basis of a simulation model M1. Here, the simulation model M1 is stored in the storage unit 18. In this embodiment, the simulation model M1 is a half car model of the vehicle 30, and the state variables are variables expressing states of the half car model. More specifically, the variables expressing unevenness on the road surface include the vertical displacement and speed of a front tire of the half car model, and the vertical displacement and speed of a rear tire of the half car model. Further, the variables expressing the up-down motion of the vehicle 30 include the vertical displacement and speed of the center of gravity of the half car model, the vertical displacement and speed of a front suspension of the half car model, and the vertical displacement and speed of a rear suspension of the half car model. Furthermore, the variables expressing the rotary motion of the vehicle 30 about the pitch axis include an angle of rotation and an angular velocity about a pitch axis passing through the center of gravity of the half car model.

The second calculation unit 14 calculates the vertical acceleration relative to the road surface with which the vehicle 30 is in contact, the angular velocity about the pitch axis, the vertical displacement, and the angular displacement about the pitch axis from the state variables predicted by the prediction unit 13 on the basis of an observation model M2. The observation model M2 is stored in the storage unit 18.

The updating unit 15 updates the state variables by data-assimilating the acceleration and angular velocity acquired by the acquisition unit 11 and the displacement and angular displacement calculated by the first calculation unit 12 with the acceleration, angular velocity, displacement, and angular displacement calculated by the second calculation unit 14. Here, data assimilation denotes processing for improving the prediction precision by updating the state variables predicted using the simulation model M1 on the basis of actual measured values. A specific example of data assimilation will be described in detail below.

The smoothing unit 16 smooths the state variables on the basis of the acceleration and angular velocity acquired by the acquisition unit 11 and the displacement and angular displacement calculated by the first calculation unit 12 following prediction by the prediction unit 13.

The estimation unit 17 estimates the road surface profile on the basis of the variables expressing unevenness on the road surface, included in the state variables. Here, the road surface profile denotes the longitudinal shape of the road surface.

The storage unit 18 stores the simulation model M1 and the observation model M2. In the road surface profile estimation device 10 according to this embodiment, the simulation model M1 is a model expressing the time evolution of the state variables by a linear transformation of the state variables and Gaussian noise, while the observation model M2 is a model for calculating the vertical acceleration relative to the road surface with which the vehicle 30 is in contact, the angular velocity about the pitch axis of the vehicle 30, the vertical displacement, and the angular displacement about the pitch axis from a linear transformation of the state variables and Gaussian noise. Further, the updating unit 15 updates the state variables so as to minimize a square error of the state variables. As will be described in detail below, the prediction unit 13, second calculation unit 14, and updating unit 15 of the road surface profile estimation device 10 according to this embodiment together function as a Kalman filter.

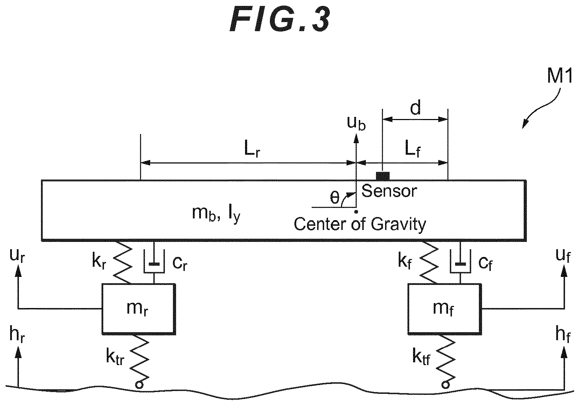

Fig. 3 is a conceptual diagram of the simulation model M1 used by the road surface profile estimation device 10 according to the first embodiment of the present invention. The simulation model M1 is a half car model including 12 state variables and 13 parameters.

The state variables include a vertical displacement $h_f$ and a vertical speed $dh_f/dt$ of the front tire of the half car model, a vertical displacement $h_r$ and a vertical speed $dh_r/dt$ of the rear tire of the half car model, a vertical displacement $u_b$ and a vertical speed $du_b/dt$ of the center of gravity of the half car model, a vertical displacement $u_f$ and a vertical speed $du_f/dt$ of the front suspension of the half car model, a vertical displacement $u_r$ and a vertical speed $du_r/dt$ of the rear suspension of the half car model, and an angle of rotation $\theta$ and an angular velocity $d\theta/dt$ about a pitch axis passing through the center of gravity of the half car model.

The parameters include a spring constant ktf of the front tire of the half car model, a mass $m_f$ of the front tire, a spring constant $k_f$ and a damping coefficient $c_f$ of the front suspension, a spring constant $k_{tr}$ of the rear tire of the half car model, a mass $m_r$ of the rear tire, a spring constant $k_r$ and a damping coefficient $c_r$ of the rear suspension, a mass $m_b$ and a moment of inertia $I_y$ about the pitch axis of the vehicle body of the half car model, a horizontal distance $L_f$ from the center of gravity of the half car model to a ground contact point of the front tire, a horizontal distance $L_r$ from the center of gravity of the half car model to a ground contact point of the rear tire, and a horizontal distance d from the ground contact point of the front tire to a disposal point of the accelerometer 21 and the angular velocity meter 22.

By employing a half car model as the simulation model M1, the operating state of the vehicle 30 can be expressed more accurately than when a quarter car model is used, and as a result, the time evolution of the state variables can be predicted with a higher degree of precision.

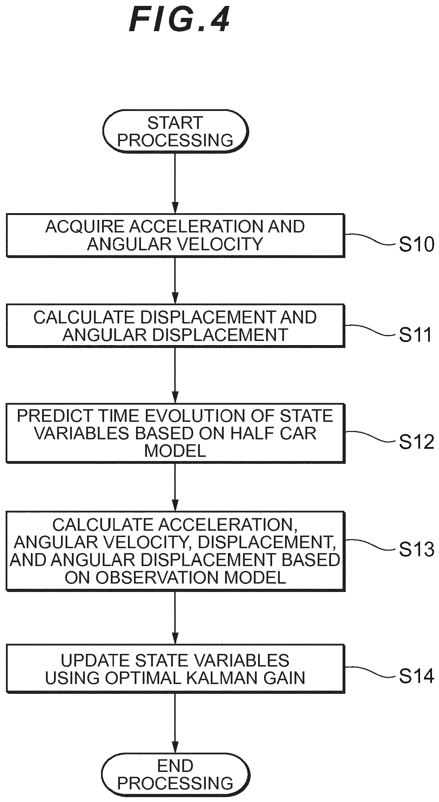

Fig. 4 is a flowchart of first processing executed by the road surface profile estimation device 10 according to the first embodiment of the present invention. The first processing is processing executed by the road surface profile estimation device 10 to data-assimilate the state variables with measured values using a Kalman filter.

The road surface profile estimation device 10 uses the acquisition unit 11 to acquire the vertical acceleration relative to the road surface with which the vehicle 30 is in contact and the angular velocity about the pitch axis of the vehicle 30 (S10). Measurement of the acceleration by the accelerometer 21 and measurement of the angular velocity by the angular velocity meter 22 may be performed at predetermined time intervals. The acquisition unit 11 may acquire the acceleration and the angular velocity every time measurement is performed by the accelerometer 21 and the angular velocity meter 22 or acquire the acceleration and the angular velocity together once measurement is complete.

The first calculation unit 12 calculates a vertical displacement by integrating the acceleration acquired by the acquisition unit 11, and calculates an angular displacement about the pitch axis by integrating the angular velocity (S11). The acceleration and angular velocity acquired by the acquisition unit 11 and the displacement and angular displacement calculated by the first calculation unit 12 are expressed together by a vector y.

The prediction unit 13 predicts the time evolution of the state variables on the basis of the half car model (S12). The time evolution of the state variables is determined on the basis of an equation of motion expressed by formula (1) below.

[Math. 1]

$$\mathbf{M}\ddot{\mathbf{U}}(t) + \mathbf{C}\dot{\mathbf{U}}(t) + \mathbf{K}\mathbf{U}(t) = \mathbf{P}(t)$$

Here, a vector U is expressed by formula (2) below. The vector U includes, as vector components, the vertical displacement $u_b$ of the center of gravity of the half car model, the angular displacement $\theta$ about the pitch axis passing through the center of gravity, the vertical displacement $u_f$ of the front suspension of the half car model, and the vertical displacement $u_r$ of the rear suspension of the half car model.

[Math. 2]

$$\mathbf{U} = \begin{bmatrix} u_b & \theta & u_f & u_r \end{bmatrix}^T$$

Further, matrices M, C, and K, which are given respectively by following formulae (3) to (5), are parameter-dependent quantities.

[Math. 3]

$$\mathbf{M} = \begin{bmatrix} m & 0 & 0 & 0 \\ 0 & I_y & 0 & 0 \\ 0 & 0 & m_f & 0 \\ 0 & 0 & 0 & m_r \end{bmatrix}$$

[Math. 4]

$$\mathbf{C} = \begin{bmatrix} c_f + c_r & L_r c_r - L_f c_f & -c_f & -c_r \\ L_r c_r - L_f c_f & L_f^2 c_f + L_r^2 c_r & L_f c_f & -L_r c_r \\ -c_f & L_f c_f & c_f & 0 \\ -c_r & -L_r c_r & 0 & c_r \end{bmatrix}$$

[Math. 5]

$$\mathbf{K} = \begin{bmatrix} k_f + k_r & L_r k_r - L_f k_f & -k_f & -k_r \\ L_r k_r - L_f k_f & L_f^2 k_f + L_r^2 k_r & L_f k_f & -L_r k_r \\ -k_f & L_f k_f & k_f + k_{tf} & 0 \\ -k_r & -L_r k_r & 0 & k_r + k_{tr} \end{bmatrix}$$

Furthermore, the right side of formula (1) is given by a vector P that is dependent on the variables expressing the unevenness of the road surface. The vector P is given by formula (6) below:

[Math. 6]

$$\mathbf{P} = \begin{bmatrix} 0 & 0 & h_f k_{tf} & h_r k_{tr} \end{bmatrix}^T$$

In the following description, as indicated by formula (7), the 12 state variables are expressed by a vector $x^a$.

[Math. 7]

$$\mathbf{x}^a = \begin{bmatrix} u_b & \theta & u_f & u_r & \dot{u}_b & \dot{\theta} & \dot{u}_f & \dot{u}_r & h_f & h_r & \dot{h}_f & \dot{h}_r \end{bmatrix}^T$$

The prediction unit 13 expresses an error that may occur when the behavior of the vehicle 30 is modeled using a half car model in the form of a noise term. The prediction unit 13 determines the time evolution of the state variables $x^a$ using the following formula (8).

[Math. 8]

$$\mathbf{x}^a{}_{k+1} = \mathbf{A}_a \mathbf{x}^a{}_k + \zeta_k$$

Here, subscript affixes "k" and "k+1" attached to the state variables $x^a$ express time steps. A matrix $A_a$ on the right side expresses the time evolution of the state variables, expressed by formula (1), as a linear transformation in time step units. When $A_a$ is expressed as $A_a = \exp(A\Delta t)$, A is expressed by formula (9) below. Note that $\Delta t$ expresses a unit time step.

[Math. 9]

$$\mathbf{A} = \begin{bmatrix} \mathbf{O}_{4\times4} & \mathbf{I}_{4\times4} & \mathbf{O}_{4\times2} \\ -\mathbf{M}^{-1}\mathbf{K} & -\mathbf{M}^{-1}\mathbf{C} & \mathbf{Z}_{4\times4} \\ \mathbf{O}_{2\times2} & \mathbf{O}_{2\times2} & \mathbf{T}_{4\times4} \end{bmatrix}$$

Here, the matrices M, C, and K are those shown in formulae (3) to (5). $I_{4\times4}$ is a $4 \times 4$ unit matrix, and the matrices $O_{4\times4}$, $O_{4\times2}$, and $O_{2\times2}$ are $4 \times 4$, $4 \times 2$, and $2 \times 2$ zero matrices, respectively. Further, a matrix Z is a quantity expressed by formula (10) below, while a matrix T is a quantity expressed by formula (11) below.

[Math. 10]

$$\mathbf{Z} = \begin{bmatrix} 0 & 0 & 0 & 0 \\ 0 & 0 & 0 & 0 \\ k_{tf} / m_f & 0 & 0 & 0 \\ 0 & 0 & k_{tr} / m_r & 0 \end{bmatrix}$$

[Math. 11]

$$\mathbf{T} = \begin{bmatrix} 0 & 1 & 0 & 0 \\ 0 & 0 & 0 & 0 \\ 0 & 0 & 0 & 1 \\ 0 & 0 & 0 & 0 \end{bmatrix}$$

Further, $\zeta_k$ on the right side of formula (8) is the noise term in the time step k. The noise term $\zeta_k$, as expressed by formula (12) below, includes an eight-dimensional vector $w_k$ and a four-dimensional vector $\eta_k$.

[Math. 12]

$$\zeta_k = \begin{bmatrix} \mathbf{w}_k \\ \eta_k \end{bmatrix}$$

In the noise term $\zeta_k$, the noise term $w_k$ with respect to the vertical displacement $u_b$ and vertical speed $du_b/dt$ of the center of gravity of the half car model, the vertical displacement $u_f$ and vertical speed $du_f/dt$ of the front suspension of the half car model, the vertical displacement $u_r$ and vertical speed $du_r/dt$ of the rear suspension of the half car model, and the angle of rotation $\theta$ and the angular velocity $d\theta/dt$ about the pitch axis passing through the center of gravity of the half car model is Gaussian noise with a mean of 0 and a variance-covariance matrix of Q. Note that $\delta_{k,l}$ represents the Kronecker delta.

[Math. 13]

$$E[\mathbf{w}_k \mathbf{w}_l^{\mathrm{T}}] = \mathbf{Q}\delta_{k,l}$$

Furthermore, in the noise term $\zeta_k$, the noise term $\eta_k$ with respect to the vertical displacement $h_f$ and vertical speed dhf/dt of the front tire of the half car model, and the vertical displacement $h_r$ and vertical speed $dh_r/dt$ of the rear tire of the half car model is Gaussian noise with a mean of 0 and a variance-covariance matrix of S.

[Math. 14]

$$E[\boldsymbol{\eta}_k \boldsymbol{\eta}_l^{\mathrm{T}}] = \mathbf{S}\delta_{k,l}$$

As is evident from formula (8), which expresses the time evolution of the state variables, the time evolution of the four-dimensional vector u gathering together the vertical displacement $h_f$ and vertical speed dhf/dt of the front tire of the half car model and the vertical displacement $h_r$ and vertical speed $dh_r/dt$ of the rear tire of the half car model is given by formula (15) below.

[Math. 15]

$$\mathbf{u}_{k+1} = \mathbf{u}_k + \boldsymbol{\eta}_k$$

The second calculation unit 14 calculates the acceleration, the angular velocity, the displacement, and the angular displacement from the state variables predicted by the prediction unit 13 on the basis of the observation model M2 (S13). The second calculation unit 14 calculates a vector y gathering together the acceleration, the angular velocity, the displacement, and the angular displacement from the state variables $x^a$ predicted by the prediction unit 13 on the basis of the observation model M2, which is expressed by formula (16) below. The second calculation unit 14 models observation using a linear transformation $C_a$ of the state variables and models an observation error using a noise term $v_k$.

[Math. 16]

$$\mathbf{y}_k = \mathbf{C}_a \mathbf{x}_k^{\,a} + \mathbf{v}_k$$

Here, the linear transformation $C_a$ is given by formula (17) below. Here, $O_4$ is a $4 \times 4$ zero matrix.

[Math. 17]

$$\mathbf{C}_a = \begin{bmatrix} \mathbf{C}_1 \\ \mathbf{O}_4 \end{bmatrix}^{\mathrm{T}}$$

The matrix C1 is given by formula (18) below.

[Math. 18]

$$\mathbf{C}_1 = \begin{bmatrix}
-\dfrac{k_f + k_r}{m_H} + \dfrac{(L_f - d)(L_r k_r - L_f k_f)}{I_z} & 0 & 1 & 0 \\[2ex]
-\dfrac{L_r k_r - L_f k_f}{m_H} + \dfrac{(L_f - d)(L_f^2 k_f + L_r^2 k_r)}{I_z} & 0 & 0 & 1 \\[2ex]
\dfrac{k_f}{m_H} + \dfrac{(L_f - d)L_f k_f}{I} & 0 & 0 & 0 \\[2ex]
\dfrac{k_r}{m_H} - \dfrac{(L_f - d)L_r k_r}{I_z} & 0 & 0 & 0 \\[2ex]
-\dfrac{c_f + c_r}{m_H} + \dfrac{(L_f - d)(L_r c_r - L_f c_f)}{I_z} & 0 & 0 & 0 \\[2ex]
-\dfrac{L_r c_r - L_f c_f}{m_H} + \dfrac{(L_f - d)(L_f^2 c_f - L_r^2 c_r)}{I_z} & 1 & 0 & 0 \\[2ex]
\dfrac{c_f}{m_H} + \dfrac{(L_f - d)L_f c_f}{I_z} & 0 & 0 & 0 \\[2ex]
\dfrac{c_r}{m_H} - \dfrac{(L_f - d)L_r c_r}{I_z} & 0 & 0 & 0
\end{bmatrix}$$

Further, the noise term $v_k$ on the right side of formula (14) is Gaussian noise with a mean of 0 and a variance-covariance matrix of R.

[Math. 19]

$$E[\mathbf{v}_k \mathbf{v}_l^{T}] = \mathbf{R}\delta_{k,l}$$

The updating unit 15 updates the state variables using an optimal Kalman gain (S14). Here, the optimal Kalman gain is an updating coefficient determined so as to minimize the square error of the state variables, and is given by formula (20) below.

[Math. 20]

$$\mathbf{G}_{k+1} = \mathbf{P}_{k+1}^{-}\mathbf{C}_a^{T}[\mathbf{C}_a\mathbf{P}_{k+1}^{-}\mathbf{C}_a^{T} + \mathbf{R}_{k+1}]^{-1}$$

$P_{k+1}^-$ on the right side of formula (20) is the variance of the pre-update state variables in the time step k+1. An initial value of an expected value of the state variables is given by formula (21) below, and an initial value of the variance is given by formula (22) below. Note that the state variables $x^a$ with a hat symbol attached thereto express estimated values.

[Math. 21]

$$\hat{\mathbf{x}}_0^{a} = E[\mathbf{x}_0]$$

[Math. 22]

$$\mathbf{P}_0 = E[(\mathbf{x}_0 - E[\mathbf{x}_0])(\mathbf{x}_0 - E[\mathbf{x}_0])^{T}]$$

As described above, the time evolution of the expected value of the state variables $x^a$ is given by formula (23) below.

[Math. 23]

$$\hat{\mathbf{x}}_{k+1}^{a-} = \mathbf{A}_a\hat{\mathbf{x}}_k^{a}$$

Here, the superscript symbol"-" indicates a pre-update quantity. Further, the time evolution of the variance of the state variables $x^a$ is given by formula (24) below.

[Math. 24]

$$\mathbf{P}_{k+1}^{-} = \mathbf{A}_a \mathbf{P}_k \mathbf{A}_a^{\mathrm{T}} + \mathbf{Q}_k$$

The updating unit 15 determines the expected value of the updated state variables $x^a$ using formula (25) below.

[Math. 25]

$$\hat{\mathbf{x}}_{k+1}^{a} = \hat{\mathbf{x}}_{k+1}^{a-} + \mathbf{G}_{k+1}(\mathbf{y}_{k+1} - \mathbf{C}_a \hat{\mathbf{x}}_{k+1}^{a-})$$

Here, "$y_{k+1}$" on the right side expresses the acceleration and angular velocity acquired by the acquisition unit 11 and the displacement and angular displacement calculated by the first calculation unit 12 in the time step k+1, and is an actual measured value acquired in relation to the vehicle 30. The second term on the right side is a term for correcting the state variables using a value obtained by multiplying an optimal Kalman gain $G_{k+1}$ by a difference between the measured values $y_{k+1}$ and observed values calculated from the state values $x_{k+1}^{a-}$.
The updating unit 15 determines the variance of the updated state variables $x^a$ using formula (26) below.

[Math. 26]

$$\mathbf{P}_{k+1} = (\mathbf{I} - \mathbf{G}_{k+1}\mathbf{C}_a)\mathbf{P}_{k+1}^{-}$$

By predicting the state variables and updating the state variables in accordance with the difference with the measured values in every time step, as described above, the state variables can be estimated with a high degree of precision. By expressing the time evolution of the state variables using the simulation model M1 including a linear transformation and Gaussian noise, and expressing observation using the observation model M2 including a linear transformation and Gaussian noise, the road surface profile can be estimated by comparatively low-load calculation.

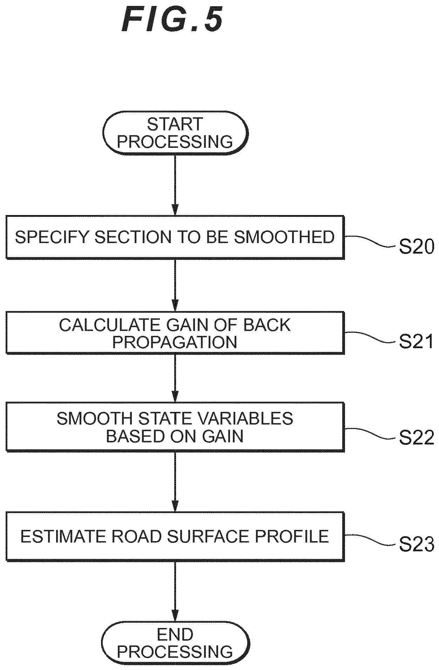

Fig. 5 is a flowchart of second processing executed by the road surface profile estimation device 10 according to the first embodiment of the present invention. The second processing is processing executed by the road surface profile estimation device 10 to estimate the road surface profile by implementing smoothing processing on the state variables.
First, the smoothing unit 16 receives specification of a section in which smoothing is to be implemented (S20). When time steps from k = 0 to k = T exist, in order to smooth the state variables $x_k$ of a time step k, the smoothing unit 16 may use all subsequent state variables $x_{k+1}$, $x_{k+2}$, ..., $x_T$. Alternatively, a section L (where L is an arbitrary natural number) may be specified, and the state variables may be smoothed using $x_{k+1}$, $x_{k+2}$, ..., $x_{k+L}$.
The smoothing unit 16 initializes an expected value of the smoothed state variables using formula (27) below, and initializes a variance of the smoothed state variables using formula (28) below.

[Math. 27]

$$\hat{\mathbf{x}}_N = \hat{\mathbf{x}}_N^a$$

[Math. 28]

$$\mathbf{P}_N^{\ b} = \mathbf{P}_N$$

Next, the smoothing unit 16 calculates a gain $\Phi$ of back propagation during the smoothing processing using formula (29) below (S21).

[Math. 29]

$$\Phi_k = \mathbf{P}_k \mathbf{A}_a [\mathbf{P}_{k+1}^{\ -}]^{-1}$$

Then, on the basis of the gain $\Phi$, the smoothing unit 16 smooths the expected value of the state variables back into the past from the time step k = T using formula (30) below. Further, the smoothing unit 16 smooths the variance of the state variables using formula (31) below (S22).

[Math. 30]

$$\hat{\mathbf{x}}_k = \hat{\mathbf{x}}_k^a + \Phi_k (\hat{\mathbf{x}}_{k+1} - \hat{\mathbf{x}}_{k+1}^{a\ -1})$$

[Math. 31]

$$\mathbf{P}_k^{\ b} = \mathbf{P}_k - \Phi_k (\mathbf{P}_{k+1}^{\ -} - \mathbf{P}_{k+1}^{\ b}) \Phi_k^{\ T}$$

Thus, the state variables are smoothed. Next, the estimation unit 17 estimates the profile of the road surface on the basis of the variables expressing the unevenness of the road surface, included in the state variables (S23). More specifically, the estimation unit 17 estimates the profile of the road surface on the basis of the vertical displacement $h_f$ of the front tire of the half car model and the vertical displacement $h_r$ of the rear tire of the half car model.

With the road surface profile estimation device 10 according to this embodiment, by employing in data assimilation not only the vertical acceleration relative to the road surface with which the vehicle 30 is in contact and the angular velocity about the pitch axis of the vehicle 30 but also the vertical displacement and the angular displacement about the pitch axis, highly stable analysis can be realized, and as a result, the profile of any road surface, including that of a general road, can be estimated with a high degree of precision using a general-purpose vehicle. Moreover, by employing in data smoothing not only the vertical acceleration and the angular velocity about the pitch axis but also the vertical displacement and the angular displacement about the pitch axis, the road surface profile can be estimated with an even higher degree of precision.

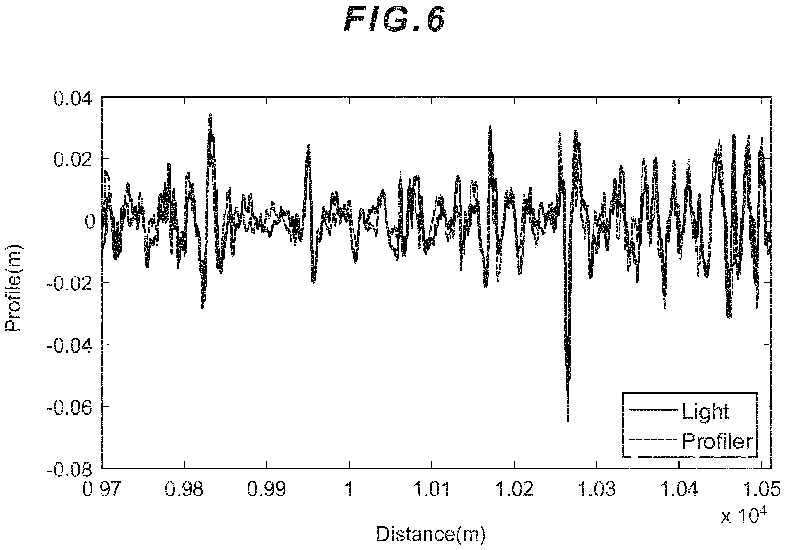

Fig. 6 is a first graph showing a relationship between a travel distance and the road surface profile, estimated by the road surface profile estimation system 1 according to the first embodiment of the present invention. In the figure, the travel distance (Distance) is shown on the horizontal axis in units of meters (m), and the road surface profile is shown on the vertical axis in units of meters (m). On the first graph, a road surface profile estimated by the road surface profile estimation system 1 according to this embodiment using a light vehicle (Light) is indicated by a solid line, and a road surface profile estimated using a dedicated vehicle (Profiler) is indicated by a dotted line. It is evident from the first graph that the road surface profile estimated by the road surface profile estimation system 1 according to this embodiment using a light vehicle and the road surface profile estimated using a dedicated vehicle substantially match. Hence, with

16

the road surface profile estimation system 1 according to this embodiment, a road surface profile can be estimated with an approximately identical degree of precision to that achieved by a dedicated vehicle using a light vehicle and the smartphone 20.

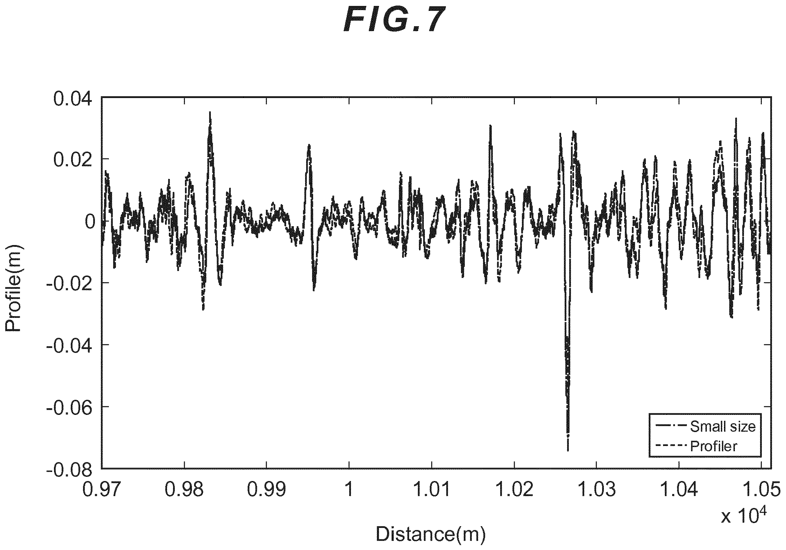

Fig. 7 is a second graph showing the relationship between the travel distance and the road surface profile, estimated by the road surface profile estimation system 1 according to the first embodiment of the present invention. In the figure, the travel distance (Distance) is shown on the horizontal axis in units of meters (m), and the road surface profile is shown on the vertical axis in units of meters (m). On the second graph, a road surface profile estimated by the road surface profile estimation system 1 according to this embodiment using a small vehicle (Small size) is indicated by a dot-dash line, and a road surface profile estimated using a dedicated vehicle (Profiler) is indicated by a dotted line. It is evident from the second graph that the road surface profile estimated by the road surface profile estimation system 1 according to this embodiment using a small vehicle and the road surface profile estimated using a dedicated vehicle substantially match. Hence, with the road surface profile estimation system 1 according to this embodiment, a road surface profile can be estimated with an approximately identical degree of precision to that achieved by a dedicated vehicle using a small vehicle and the smartphone 20.

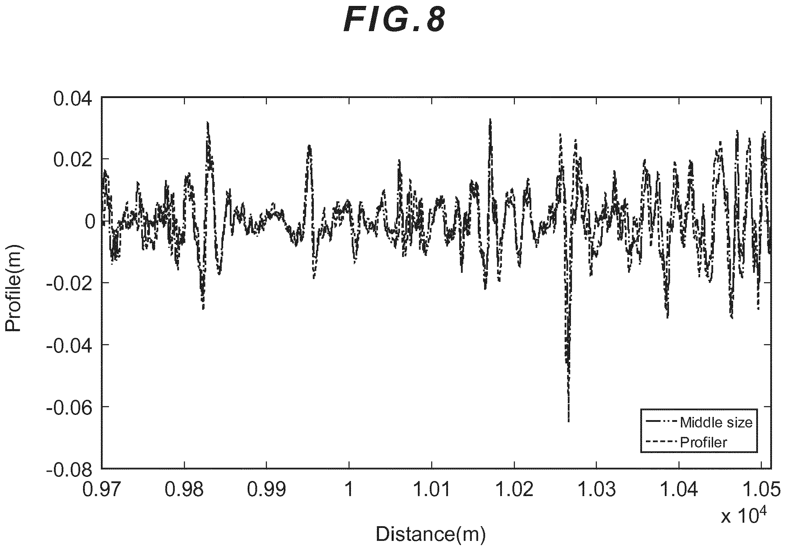

Fig. 8 is a third graph showing the relationship between the travel distance and the road surface profile, estimated by the road surface profile estimation system 1 according to the first embodiment of the present invention. In the figure, the travel distance (Distance) is shown on the horizontal axis in units of meters (m), and the road surface profile is shown on the vertical axis in units of meters (m). On the third graph, a road surface profile estimated by the road surface profile estimation system 1 according to this embodiment using a middle-sized vehicle (Middle size) is indicated by a dot-dot-dash line, and a road surface profile estimated using a dedicated vehicle (Profiler) is indicated by a dotted line. It is evident from the third graph that the road surface profile estimated by the road surface profile estimation system 1 according to this embodiment using a middle-sized vehicle and the road surface profile estimated using a dedicated vehicle substantially match. Hence, with the road surface profile estimation system 1 according to this embodiment, a road surface profile can be estimated with an approximately identical degree of precision to that achieved by a dedicated vehicle using a middle-sized vehicle and the smartphone 20.

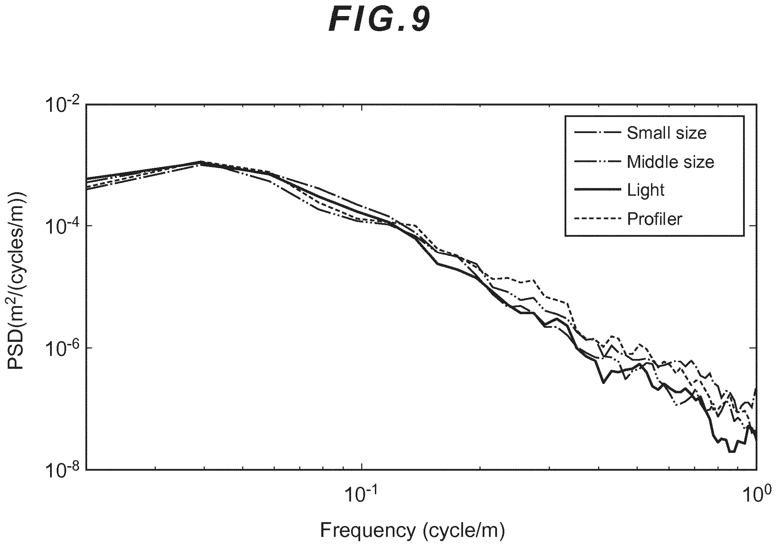

Fig. 9 is a fourth graph showing a power spectrum of the road surface profile estimated by the road surface profile estimation system 1 according to the first embodiment of the present invention. In the figure, a frequency (Frequency) is shown on the horizontal axis in units of cycles/meter (cycle/m), and a power spectrum density (PSD) of the road surface profile is shown on the vertical axis in units of $m^2/(cycle/m)$. On the fourth graph, the power spectrum density of the road surface profile estimated by the road surface profile estimation system 1 according to this embodiment using a light vehicle (Light) is indicated by a solid line, the power spectrum density of the road surface profile estimated by the road surface profile estimation system 1 according to this embodiment using a small vehicle (Small size) is indicated by a dot-dash line, the power spectrum density of the road surface profile estimation system 1 according to this embodiment using a middle-sized vehicle (Middle size) is indicated by a dot-dot-dash line, and the power spectrum density of the road surface profile estimated using a dedicated vehicle (Profiler) is indicated by a dotted line. It is evident from the fourth graph that when any of a light vehicle, a small vehicle, and a middle-sized vehicle is used, the power spectrum density of the road surface profile estimated by the road surface profile estimation system 1 according to this embodiment substantially matches the power spectrum density of the road surface profile estimated using a dedicated vehicle. Hence, with the road surface profile estimation system 1 according to this embodiment, a road surface profile can be estimated with an approximately identical degree of precision to that achieved by a dedicated vehicle using any desired vehicle and the smartphone 20.

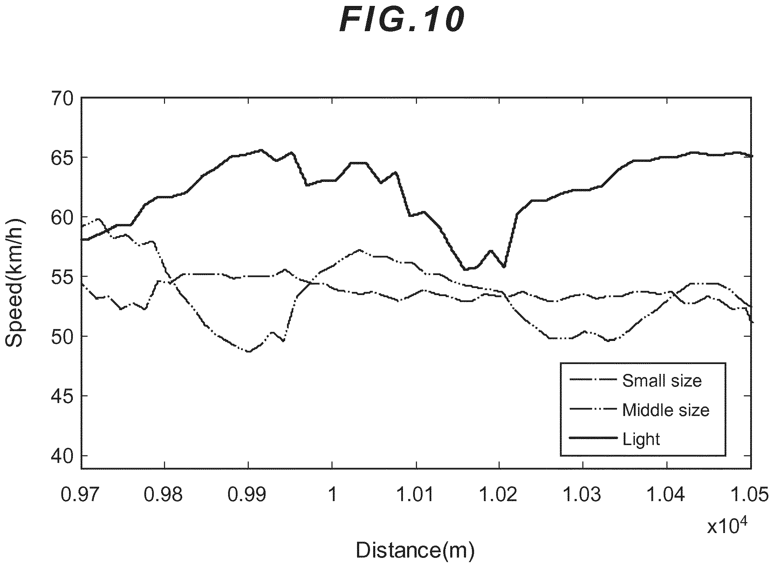

Fig. 10 is a fifth graph showing the travel distance and the speed of the vehicle 30 during estimation of the road surface profile by the road surface profile estimation system 1 according to the first embodiment of the present invention. In the figure, the travel distance (Distance) is shown on the horizontal axis in units of meters (m), and the speed of the vehicle 30 is shown on the vertical axis in units of kilometers per hour (km/h). On the fifth graph, the speed of a light vehicle (Light) is indicated by a solid line, the speed of a small vehicle (Small size) is indicated by a dot-dash line, and the speed of a middle-sized vehicle (Middle size) is indicated by a dot-dot-dash line. It is evident from the fifth graph that the respective speeds of the light vehicle, the small vehicle, and the middle-sized vehicle are not constant, and that the respective speeds vary differently over time. Hence, with the road surface profile estimation system 1 according to this embodiment, even when the speed of the vehicle 30, which is used to measure the acceleration and angular velocity, varies, the road surface profile is estimated with stability. As a result, with the road surface profile estimation system 1 according to this embodiment, a road surface profile can be estimated with a high degree of precision regardless of the size and travel speed of the vehicle 30 in which the smartphone 20 having the built-in accelerometer 21 and angular velocity meter 22 is disposed. Note that even when the location of the smartphone 20 having the built-in accelerometer 21 and angular velocity meter 22 is modified, by modifying the horizontal distance d from the ground contact point of the front tire to the disposal point of the accelerometer 21 and the angular velocity meter 22, which is one of the parameters of the simulation model M1, the road surface profile can be estimated with a high degree of precision.

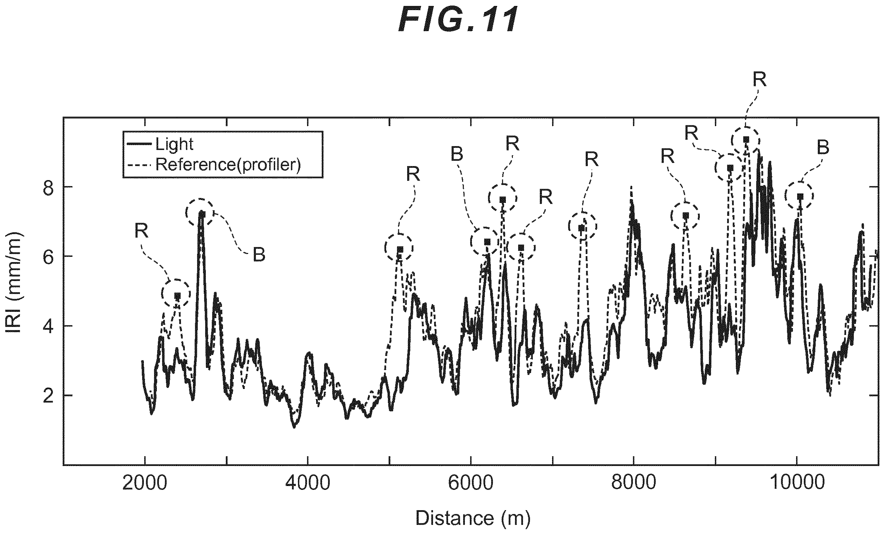

Fig. 11 is a sixth graph showing the travel distance and the speed of the vehicle 30 during estimation of the road surface profile by the road surface profile estimation system 1 according to the first embodiment of the present invention. In the figure, the travel distance (Distance) is shown on the horizontal axis in units of meters (m), and the IRI, which is an index of the road surface profile, is shown on the vertical axis in units of millimeters/meter (mm/m). On the sixth graph, an IRI estimated by the road surface profile estimation system 1 according to this embodiment using a light vehicle (Light) is indicated by a solid line, and an IRI estimated using a dedicated vehicle is indicated by a dotted line. Further, on the sixth graph, "R" denotes locations in which the dedicated vehicle stops for red lights, and "B" denotes locations in which the dedicated vehicle starts on green lights. It is evident from the sixth graph that in the locations where the dedicated vehicle starts on green lights, the IRI estimated by the road surface profile estimation system 1 according to this embodiment substantially matches the IRI estimated using the dedicated vehicle, but in the locations where the dedicated vehicle stops for red lights, the IRI estimated by the road surface profile estimation system 1 according to this embodiment diverges from the IRI estimated using the dedicated vehicle. Considering that the divergence between the IRI estimated by the road surface profile estimation system 1 according to this embodiment and the IRI estimated using the dedicated vehicle is concentrated in the locations where the dedicated vehicle stops and starts and that the dedicated vehicle is designed envisaging measurement during high-speed travel and may therefore be unable to estimate the IRI of the road surface precisely immediately before and after stopping and starting, the IRI estimated using the dedicated vehicle may deviate from the true value thereof immediately before and after stopping and starting. With the road surface profile estimation system 1 according to this embodiment, the IRI of the road surface can be estimated with a high degree of precision even when the vehicle 30 stops and starts. Hence, with the road surface profile estimation system 1 according to this embodiment, the profile of a road surface can be estimated with a high degree of precision even on a general road where frequent stops and starts are unavoidable.

[Second Embodiment]

In the road surface profile estimation system 1 according to a second embodiment, the simulation model M1 and observation model M2 stored in the storage unit 18 of the road surface profile estimation device 10 differ from those of the first embodiment. With regard to all other configurations, the road surface profile estimation system 1 according to the second embodiment is configured similarly to the road surface profile estimation system according to the first embodiment. In the road surface profile estimation device 10 according to this embodiment, the simulation model M1 is a model expressing the time evolution of the state variables using either a linear transformation or a non-linear transformation of the state variables and either Gaussian noise or non-Gaussian noise, and the observation model M2 is a model used to calculate the vertical acceleration relative to the road surface with which the vehicle 30 is in contact, the angular velocity about the pitch axis of the vehicle 30, the vertical displacement, and the angular displacement about the pitch axis using either a linear transformation or a non-linear transformation of the state variables and either Gaussian noise or non-Gaussian noise. As will be described in detail below, the prediction unit 13, the second calculation unit 14, and the updating unit 15 of the road surface profile estimation device 10 according to this embodiment together function as a particle filter.

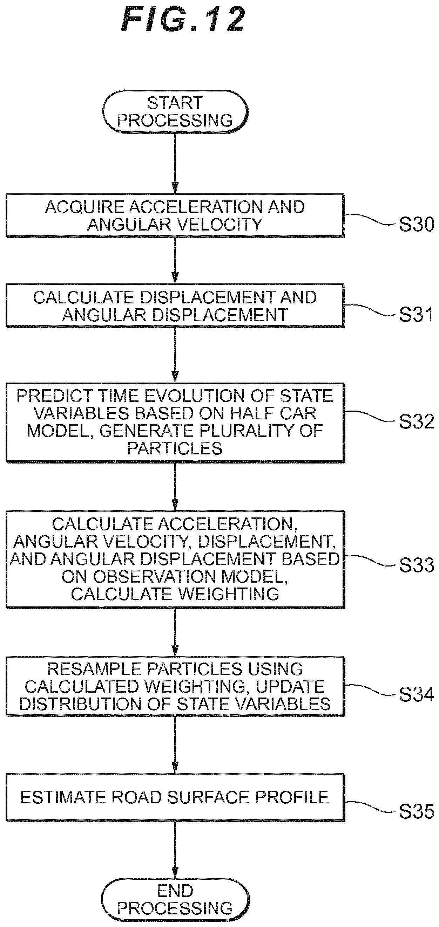

Fig. 12 is a flowchart of third processing executed by the road surface profile estimation device 10 according to the second embodiment of the present invention. The third processing is processing executed by the road surface profile estimation device 10 to data-assimilate the state variables and the measured values using a particle filter.

The road surface profile estimation device 10 uses the acquisition unit 11 to acquire the vertical acceleration relative to the road surface with which the vehicle 30 is in contact and the angular velocity about the pitch axis of the vehicle 30 (S30). Measurement of the acceleration by the accelerometer 21 and measurement of the angular velocity by the angular velocity meter 22 may be performed at predetermined time intervals. The acquisition unit 11 may acquire the acceleration and the angular velocity every time measurement is performed by the accelerometer 21 and the angular velocity meter 22 or acquire the acceleration and the angular velocity together once measurement is complete.

The first calculation unit 12 calculates the vertical displacement by integrating the acceleration acquired by the acquisition unit 11, and calculates the angular displacement about the pitch axis by integrating the angular velocity (S31). The acceleration and angular velocity acquired by the acquisition unit 11 and the displacement and angular displacement calculated by the first calculation unit 12 are expressed together by the vector y.

The prediction unit 13 predicts the time evolution of the state variables on the basis of the half car model and generates a plurality of particles on the basis of a probability distribution of the predicted state variables (S32). The time evolution of the state variables is determined using the simulation model M1, which is expressed by formula (32) below.

[Math. 32]

$$x_{k+1} = f_k(x_k) + w(k)$$

Here, $f_k$ is the linear transformation or non-linear transformation of the state variables $x_k$ in the time step k. Further, w(k) is the noise term of the time step k and denotes Gaussian noise or non-Gaussian noise with a mean of 0. The prediction unit 13 generates N particles $x_{k-1}(i)$ on the basis of a probability distribution $p(x_{k-1}|y_{1:k-1})$, determines $x_k(i)$ by predicting the time evolution using formula (32), and determines a predicted probability distribution $p(x_k|y_{1:k-1})$ of the state variables in the time step k approximately using formula (33) below.

[Math. 33]

$$p(x_k|y_{1:k-1}) = \sum_{i=1}^{N} p(x_{k-1}|y_{1:k-1})\delta(x_k - x_k(i))$$

Here, $y_{1:k-1}$ represents the acceleration, angular velocity, displacement, and angular displacement measured from the time step k = 1 to the time step k-1. Further, $\delta$ represents a delta function. Furthermore, i = 1, 2, ... N. Note that an initial condition $p(x_1|y_{1:1})$ may be assumed to be a uniform distribution, for example, or may be set as $p(x_2|y_{1:1}) = \Sigma_i=1^N\delta (x_2 - x_2 (i))/N$. Needless to mention, the initial condition does not have to be a uniform distribution, and any desired distribution may be assumed.

**The** second calculation unit 14 calculates the acceleration, the angular velocity, the displacement, and the angular displacement from the state variables predicted by the prediction unit 13 on the basis of the observation model M2, and calculates a weighting to be used during updating (S33). The second calculation unit 14 calculates the acceleration, angular velocity, displacement, and angular displacement $y_k$ from the state variables $x_k$ predicted by the prediction unit 13 on the basis of the observation model M2, which is expressed by formula (33) below.

[Math. 34]

$$y_k = h_k(x_k) + v(k)$$

Here, $h_k$ is the linear transformation or non-linear transformation of the state variables $x_k$ in the time step k. Further, v(k) is the noise term of the time step k and denotes Gaussian noise or non-Gaussian noise with a mean of 0. The second calculation unit 14 determines the probability distribution $p(y_k|x_k (i))$ of the measured values in a case where the particles $x_k(i)$ are acquired in the time step k on the basis of the observation model M2 expressed by formula (33), and calculates a weighting $q_i$ using formula (34) below.

[Math. 35]

$$q_i = p(y_k | x_k(i)) \bigg/ \sum_{i=1}^{N} p(y_k | x_k(i))$$

The updating unit 15 resamples the particles using the calculated weighting $q_i$, and updates the probability distribution of the state variables (S34). The updating unit 15 determines a probability distribution $p(x_k|y_{1:k})$ of the state variables in the time step k following acquisition of the measured values $y_k$ approximately using

$$p(x_k \mid y_{1:k}) = \Sigma_{k=1}^{N} q_i \delta (x_k - x_k (i))/N.$$

The estimation unit 17 estimates the road surface profile on the basis of the probability distribution $p(x_k \mid y_{1:k})$ of the state variables (S35). The estimation unit 17 may estimate the road surface profile by determining the expected value of the variables representing the unevenness of the road surface, included in the state variables.

With the road surface profile estimation device 10 according to this embodiment, the time evolution of the state variables can be expressed using the simulation model M1 including a non-linear transformation and non-Gaussian noise, and observation can be expressed using the observation model M2 including a non-linear transformation and non-Gaussian noise. Thus, non-linear behavior and non-Gaussian vibration can be described accurately, and as a result, the road surface profile can be estimated with an even higher degree of precision.

The embodiments described above are provided to facilitate understanding of the present invention and are not to be interpreted as limiting the present invention. The respective elements included in the embodiments, as well as the arrangements, materials, conditions, shapes, sizes, and so on thereof, are not limited to those cited in the embodiments and may be modified as appropriate. Moreover, configurations cited in different embodiments may be partially replaced or combined, within the scope of the appended claims.

**Claims**

1. A road surface profile estimation device comprising:

   an acquisition unit that acquires a vertical acceleration relative to a road surface with which a vehicle is in contact and angular velocity about a pitch axis of the vehicle; and
   a first calculation unit that calculates a vertical displacement by integrating the acceleration and calculates an angular displacement about the pitch axis by integrating the angular velocity;
   **characterized by** a prediction unit that predicts, on the basis of a simulation model, a time evolution of state variables including variables expressing unevenness on a road surface along which the vehicle is traveling, variables expressing up-down motion of the vehicle, and variables expressing rotary motion about the pitch axis of the vehicle;
   a second calculation unit that calculates, on the basis of an observation model, the acceleration, the angular velocity, the displacement, and the angular displacement from the state variables predicted by the prediction unit;
   an updating unit that updates the state variables by data-assimilating the acceleration and the angular velocity acquired by the acquisition unit and the displacement and the angular displacement calculated by the first calculation unit with the acceleration, the angular velocity, the displacement, and the angular displacement calculated by the second calculation unit; and
   an estimation unit that estimates the road surface profile on the basis of the variables expressing the unevenness of the road surface, included in the state variables.

2. The road surface profile estimation device according to claim 1, further comprising a smoothing unit that smooths the state variables on the basis of the acceleration and the angular velocity acquired by the acquisition unit and the displacement and the angular displacement calculated by the first calculation unit following a point at which the prediction unit executes prediction.

3. The road surface profile estimation device according to claim 1, wherein the simulation model is a half car model of the vehicle, and
   the state variables are variables expressing states of the half car model.

4. The road surface profile estimation device according to claim 3, wherein the variables expressing the unevenness of the road surface include a vertical displacement and a vertical speed of a front tire of the half car model, and a vertical displacement and a vertical speed of a rear tire of the half car model,

   the variables expressing the up-down motion of the vehicle include a vertical displacement and a vertical speed of a center of gravity of the half car model, a vertical displacement and a vertical speed of a front suspension of the half car model, and a vertical displacement and a vertical speed of a rear suspension of the half car model, and
   the variables expressing the rotary motion about the pitch axis of the vehicle include an angle of rotation and an angular velocity about a pitch axis passing through the center of gravity of the half car model.

5. The road surface profile estimation device according to any one of claim 1, wherein the simulation model is a model expressing the time evolution of the state variables by a linear transformation or a non-linear transformation of the state variables and Gaussian noise or non-Gaussian noise, and

the observation model is a model for calculating the acceleration, the angular velocity, the displacement, and the angular displacement using a linear transformation or a non-linear transformation of the state variables and Gaussian noise or non-Gaussian noise.

6. The road surface profile estimation device according to claim 5, wherein the simulation model is a model expressing the time evolution of the state variables by a linear transformation of the state variables and Gaussian noise,

the observation model is a model for calculating the acceleration, the angular velocity, the displacement, and the angular displacement using a linear transformation of the state variables and Gaussian noise, and

the updating unit updates the state variables so as to minimize a square error of the state variables.

7. A road surface profile estimation system comprising:

an accelerometer disposed in a vehicle in order to measure a vertical acceleration relative to a road surface with which the vehicle is in contact;

an angular velocity meter disposed in the vehicle in order to measure an angular velocity about a pitch axis of the vehicle; and

a road surface profile estimation device according to any of the previous claims, for estimating a profile of a road surface along which the vehicle is traveling,

wherein the acquisition unit acquires the acceleration from the accelerometer and the angular velocity from the angular velocity meter.

8. A method of estimating a road surface profile which comprises:

a first step of acquiring a vertical acceleration relative to a road surface with which a vehicle is in contact and angular velocity about a pitch axis of the vehicle; and

a second step of calculating a vertical displacement by integrating the acceleration and calculating an angular displacement about the pitch axis by integrating the angular velocity;

**characterized by** a third step of predicting, on the basis of a simulation model, a time evolution of state variables including variables expressing unevenness on a road surface along which the vehicle is traveling, variables expressing up-down motion of the vehicle, and variables expressing rotary motion about the pitch axis of the vehicle;

a fourth step of calculating, on the basis of an observation model, the acceleration, the angular velocity, the displacement, and the angular displacement from the state variables predicted in the third step;

a fifth step of updating the state variables by data-assimilating the acceleration and the angular velocity acquired in the first step and the displacement and the angular displacement calculated in the second step with the acceleration, the angular velocity, the displacement, and the angular displacement calculated in the fourth step; and

a sixth step of estimating the road surface profile on the basis of the variables expressing the unevenness of the road surface, included in the state variables.

9. A non-transitory recording medium recording a computer readable program, which, when executed by a computer provided in a road surface profile estimation device, causes the computer to function as:

an acquisition unit that acquires a vertical acceleration relative to a road surface with which a vehicle is in contact and angular velocity about a pitch axis of the vehicle; and

a first calculation unit that calculates a vertical displacement by integrating the acceleration and calculates an angular displacement about the pitch axis by integrating the angular velocity;

**characterized by** a prediction unit that predicts, on the basis of a simulation model, a time evolution of state variables including variables expressing unevenness on a road surface along which the vehicle is traveling, variables expressing up-down motion of the vehicle, and variables expressing rotary motion about the pitch axis of the vehicle;

a second calculation unit that calculates, on the basis of an observation model, the acceleration, the angular velocity, the displacement, and the angular displacement from the state variables predicted by the prediction unit;

an updating unit that updates the state variables by data-assimilating the acceleration and the angular velocity acquired by the acquisition unit and the displacement and the angular displacement calculated by the first calculation unit with the acceleration, the angular velocity, the displacement, and the angular displacement calculated by the second calculation unit; and

an estimation unit that estimates the road surface profile on the basis of the variables expressing the unevenness of the road surface, included in the state variables.

**Patentansprüche**

1.  Straßenoberflächenprofilschätzvorrichtung, umfassend:

    eine Erfassungseinheit, die eine vertikale Beschleunigung in Bezug auf eine Straßenoberfläche, mit der ein Fahrzeug in Kontakt ist, und eine Winkelgeschwindigkeit um eine Nickachse des Fahrzeugs erfasst; und
    eine erste Berechnungseinheit, die eine vertikale Verlagerung berechnet, indem die Beschleunigung integriert wird, und eine Winkelverlagerung um die Nickachse berechnet, indem die Winkelgeschwindigkeit integriert wird; **gekennzeichnet durch** eine Vorhersageeinheit, die auf Grundlage eines Simulationsmodells eine Zeitentwicklung von Zustandsvariablen, einschließlich Variablen, die eine Unebenheit auf einer Straßenoberfläche ausdrücken, entlang der das Fahrzeug fährt, Variablen, die eine Auf-Ab-Bewegung des Fahrzeugs ausdrücken, und Variablen, die eine Drehbewegung um die Nickachse des Fahrzeugs ausdrücken, vorhersagt;
    eine zweite Berechnungseinheit, die auf Grundlage eines Beobachtungsmodells die Beschleunigung, die Winkelgeschwindigkeit, die Verlagerung und die Winkelverlagerung aus den durch die Vorhersageeinheit vorhergesagten Zustandsvariablen berechnet;
    eine Aktualisierungseinheit, welche die Zustandsvariablen durch Datenangleichungen der Beschleunigung und der Winkelgeschwindigkeit, die durch die Erfassungseinheit erfasst wurden, und der Verlagerung und Winkelverlagerung, die durch die erste Berechnungseinheit berechnet wurden, mit der Beschleunigung, der Winkelgeschwindigkeit, der Verlagerung und der Winkelverlagerung aktualisiert, die durch die zweite Berechnungseinheit berechnet wurden; und
    eine Schätzeinheit, die das Straßenoberflächenprofil auf Grundlage der die Unebenheit der Straßenoberfläche ausdrückenden Variablen schätzt, die in den Zustandsvariablen enthalten sind.

2.  Straßenoberflächenprofilschätzvorrichtung nach Anspruch 1, darüber hinaus eine Glättungseinheit umfassend, welche die Zustandsvariablen auf Grundlage der durch die Erfassungseinheit erfasste Beschleunigung und Winkelgeschwindigkeit und die durch die erste Berechnungseinheit berechnete Verlagerung und Winkelverlagerung auf einen Punkt folgend glättet, an dem die Vorhersageeinheit eine Vorhersage durchführt.

3.  Straßenoberflächenprofilschätzvorrichtung nach Anspruch 1, wobei das Simulationsmodell ein Halbautomodell des Fahrzeugs ist, und
    die Zustandsvariablen Variablen sind, welche die Zustände des Halbautomodells ausdrücken.

4.  Straßenoberflächenprofilschätzvorrichtung nach Anspruch 3, wobei die Variablen, welche die Unebenheit der Straßenoberfläche ausdrücken, eine Vertikalverlagerung und eine Vertikalgeschwindigkeit eines Vorderrads des Halbautomodells und eine Vertikalverlagerung und eine Vertikalgeschwindigkeit eines Hinterrads des Halbautomodells enthalten,

    die Variablen, welche die Auf-Ab-Bewegung des Fahrzeugs ausdrücken, eine Vertikalverlagerung und eine Vertikalgeschwindigkeit eines Schwerpunkts des Halbautomodells, eine Vertikalverlagerung und eine Vertikalgeschwindigkeit einer vorderen Aufhängung des Halbautomodells, und eine Vertikalverlagerung und eine Vertikalgeschwindigkeit einer hinteren Aufhängung des Halbautomodells enthalten, und
    wobei die Variablen, welche die Drehbewegung um die Nickachse des Fahrzeugs ausdrücken, einen Drehwinkel und eine Winkelgeschwindigkeit um eine durch den Schwerpunkt des Halbautomodells verlaufende Nickachse enthalten.

5.  Straßenoberflächenprofilschätzvorrichtung nach Anspruch 1, wobei das Simulationsmodell ein Modell ist, das die Zeitentwicklung der Zustandsvariablen durch eine lineare Transformation oder eine nichtlineare Transformation der Zustandsvariablen und Gaußsches Rauschen oder Nicht-Gaußsches Rauschen ausdrückt, und
    das Beobachtungsmodell ein Modell ist, um die Beschleunigung, die Winkelgeschwindigkeit, die Verlagerung und die Winkelverlagerung unter Verwendung einer linearen Transformation oder einer nichtlinearen Transformation der Zustandsvariablen und von Gaußschem Rauschen oder Nicht-Gaußschem Rauschen zu berechnen.

**6.** Straßenoberflächenprofilschätzvorrichtung nach Anspruch 5, wobei das Simulationsmodell ein Modell ist, das die Zeitentwicklung der Zustandsvariablen durch eine lineare Transformation der Zustandsvariablen und Gaußsches Rauschen ausdrückt,

das Beobachtungsmodell ein Modell ist, um die Beschleunigung, die Winkelgeschwindigkeit, die Verlagerung und die Winkelverlagerung unter Verwendung einer linearen Transformation der Zustandsvariablen und von Gaußschem Rauschen zu berechnen, und
die Aktualisierungseinheit die Zustandsvariablen aktualisiert, um einen Quadratfehler der Zustandsvariablen zu minimieren.

**7.** Straßenoberflächenprofilschätzsystem, umfassend:

ein Beschleunigungsmessgerät, das in einem Fahrzeug angeordnet ist, um eine Vertikalbeschleunigung in Bezug auf eine Straßenoberfläche zu messen, mit der das Fahrzeug in Kontakt ist;
ein Winkelgeschwindigkeitsmessgerät, das in dem Fahrzeug angeordnet ist, um eine Winkelgeschwindigkeit um eine Nickachse des Fahrzeugs zu messen; und
eine Straßenoberflächenprofilschätzvorrichtung nach einem der vorhergehenden Ansprüche, um ein Profil einer Straßenoberfläche zu schätzen, entlang der das Fahrzeug fährt,
wobei die Erfassungseinheit die Beschleunigung aus dem Beschleunigungsmessgerät und die Winkelgeschwindigkeit aus dem Winkelgeschwindigkeitsmessgerät erfasst.

**8.** Verfahren zum Schätzen eines Straßenoberflächenprofils, umfassend:

einen ersten Schritt des Erfassens einer Vertikalbeschleunigung in Bezug auf eine Straßenoberfläche, mit der ein Fahrzeug in Kontakt ist, und einer Winkelgeschwindigkeit um eine Nickachse des Fahrzeugs; und
einen zweiten Schritt des Berechnens einer Vertikalverlagerung, indem die Beschleunigung integriert wird, und des Berechnens einer Winkelverlagerung um die Nickachse, indem die Winkelgeschwindigkeit integriert wird;
**gekennzeichnet durch** einen dritten Schritt des Vorhersagens auf Grundlage eines Simulationsmodells einer Zeitentwicklung von Zustandsvariablen, die Variablen, die eine Unebenheit auf einer Straßenoberfläche ausdrücken, entlang der das Fahrzeug fährt, Variablen, die eine Auf-Ab-Bewegung des Fahrzeugs ausdrücken, und Variablen enthalten, die eine Drehbewegung um die Nickachse des Fahrzeugs ausdrücken;
einen vierten Schritt des auf Grundlage eines Beobachtungsmodells erfolgenden Berechnens der Beschleunigung, der Winkelgeschwindigkeit, der Verlagerung und der Winkelverlagerung aus den im dritten Schritt vorhergesagten Zustandsvariablen;
einen fünften Schritt des Aktualisierens der Zustandsvariablen durch Datenangleichung der im ersten Schritt erfassten Beschleunigung und Winkelgeschwindigkeit und der im zweiten Schritt berechneten Verlagerung und Winkelverlagerung mit der im vierten Schritt berechneten Beschleunigung, Winkelgeschwindigkeit, Verlagerung und Winkelverlagerung; und
einen sechsten Schritt des Schätzens des Straßenoberflächenprofils auf Grundlage der die Unebenheit der Straßenoberfläche ausdrückenden Variablen, die in den Zustandsvariablen enthalten sind.

**9.** Nichttransitorisches Aufzeichnungsmedium, das ein computerlesbares Programm aufzeichnet, das, wenn es durch einen in einer Straßenoberflächenschätzvorrichtung vorgesehenen Computer ausgeführt wird, bewirkt, dass der Computer funktioniert als:

eine Erfassungseinheit, die eine Vertikalbeschleunigung in Bezug auf eine Straßenoberfläche, mit der ein Fahrzeug in Kontakt ist, und eine Winkelgeschwindigkeit um eine Nickachse des Fahrzeugs erfasst; und
eine erste Berechnungseinheit, die eine Vertikalverlagerung berechnet, indem die Beschleunigung integriert wird, und eine Winkelverlagerung um die Nickachse berechnet, indem die Winkelgeschwindigkeit integriert wird;
**gekennzeichnet durch** eine Vorhersageeinheit, die auf Grundlage eines Simulationsmodells eine Zeitentwicklung von Zustandsvariablen, einschließlich Variablen, die eine Unebenheit auf einer Straßenoberfläche ausdrücken, entlang der das Fahrzeug fährt, Variablen, die eine Auf-Ab-Bewegung des Fahrzeugs ausdrücken, und Variablen, die eine Drehbewegung um die Nickachse des Fahrzeugs ausdrücken, vorhersagt;
eine zweite Berechnungseinheit, die auf Grundlage eines Beobachtungsmodells die Beschleunigung, die Winkelgeschwindigkeit, die Verlagerung und die Winkelverlagerung aus den durch die Vorhersageeinheit vorhergesagten Zustandsvariablen berechnet;
eine Aktualisierungseinheit, welche die Zustandsvariablen durch Datenangleichung der Beschleunigung und der Winkelgeschwindigkeit, die durch die Erfassungseinheit erfasst wurden, und der Verlagerung und Winkelgeschwindigkeit, die durch die erste Berechnungseinheit berechnet wurden, mit der Beschleunigung, Winkelgeschwindigkeit, Verlagerung und Winkelverlagerung aktualisiert, die durch die zweite Berechnungseinheit berechnet wurden; und

eine Schätzeinheit, die das Straßenoberflächenprofil auf Grundlage der die Unebenheit der Straßenoberfläche ausdrückenden Variablen schätzt, die in den Zustandsvariablen enthalten sind.

## Revendications

1. Dispositif d'estimation de profil de surface de route comprenant :

une unité d'acquisition qui acquiert une accélération verticale par rapport à une surface de route avec laquelle un véhicule est en contact et une vitesse angulaire autour un axe de tangage du véhicule ; et

une première unité de calcul qui calcule un déplacement vertical en intégrant l'accélération et calcule un déplacement angulaire autour de l'axe de tangage en intégrant la vitesse angulaire ;

**caractérisé par** une unité de prédiction qui prédit, sur la base d'un modèle de simulation, une évolution temporelle de variables d'état incluant des variables exprimant une inégalité sur une surface de route le long de laquelle le véhicule circule, des variables exprimant un mouvement haut-bas du véhicule, et des variables exprimant un mouvement rotatif autour de l'axe de tangage du véhicule ;

une deuxième unité de calcul qui calcule, sur la base d'un modèle d'observation, l'accélération, la vitesse angulaire, le déplacement, et le déplacement angulaire à partir des variables d'état prédites par l'unité de prédiction ;

une unité de mise à jour qui met à jour les variables d'état en assimilant en termes de données l'accélération et la vitesse angulaire acquises par l'unité d'acquisition et le déplacement et le déplacement angulaire calculés par la première unité de calcul avec l'accélération, la vitesse angulaire, le déplacement, et le déplacement angulaire calculés par la deuxième unité de calcul ; et

une unité d'estimation qui estime le profil de surface de route sur la base des variables exprimant l'inégalité de la surface de route, incluses dans les variables d'état.

2. Le dispositif d'estimation de profil de surface de route selon la revendication 1, comprenant en outre une unité de lissage qui lisse les variables d'état sur la base de l'accélération et de la vitesse angulaire acquises par l'unité d'acquisition et du déplacement et du déplacement angulaire calculés par la première unité de calcul suivant un point auquel l'unité de prédiction exécute une prédiction.

3. Le dispositif d'estimation de profil de surface de route selon la revendication 1, sachant que le modèle de simulation est un modèle de demi-voiture du véhicule, et

les variables d'état sont des variables exprimant des états du modèle de demi-voiture.

4. Le dispositif d'estimation de profil de surface de route selon la revendication 3, sachant que les variables exprimant l'inégalité de la surface de route incluent un déplacement vertical et une vitesse verticale d'un pneu avant du modèle de demi-voiture, et un déplacement vertical et une vitesse verticale d'un pneu arrière du modèle de demi-voiture,

les variables exprimant le mouvement haut-bas du véhicule incluent un déplacement vertical et une vitesse verticale d'un centre de gravité du modèle de demi-voiture, un déplacement vertical et une vitesse verticale d'une suspension avant du modèle de demi-voiture, et un déplacement vertical et une vitesse verticale d'une suspension arrière du modèle de demi-voiture, et

les variables exprimant le mouvement rotatif autour de l'axe de tangage du véhicule incluent un angle de rotation et une vitesse angulaire autour d'un axe de tangage passant par le centre de gravité du modèle de demi-voiture.

5. Le dispositif d'estimation de profil de surface de route selon la revendication 1, sachant que le modèle de simulation est un modèle exprimant l'évolution temporelle des variables d'état par une transformation linéaire ou une transformation non linéaire des variables d'état et d'un bruit gaussien ou d'un bruit non gaussien, et

le modèle d'observation est un modèle servant à calculer l'accélération, la vitesse angulaire, le déplacement, et le déplacement angulaire moyennant une transformation linéaire ou une transformation non linéaire des variables d'état et d'un bruit gaussien ou d'un bruit non gaussien.

6. Le dispositif d'estimation de profil de surface de route selon la revendication 5, sachant que le modèle de simulation est un modèle exprimant l'évolution temporelle des variables d'état par une transformation linéaire des variables d'état et d'un bruit gaussien,

le modèle d'observation est un modèle servant à calculer l'accélération, la vitesse angulaire, le déplacement, et le déplacement angulaire moyennant une transformation linéaire des variables d'état et d'un bruit gaussien, et l'unité de mise à jour met à jour les variables d'état de manière à minimiser une erreur carrée des variables d'état.

7. Système d'estimation de profil de surface de route comprenant :

un accéléromètre disposé dans un véhicule afin de mesurer une accélération verticale par rapport à une surface de route avec laquelle le véhicule est en contact ; un compteur de vitesse angulaire disposé dans le véhicule afin de mesurer une vitesse angulaire autour d'un axe de tangage du véhicule ; et un dispositif d'estimation de profil de surface de route selon l'une quelconque des revendications précédentes, destiné à estimer un profil d'une surface de route le long de laquelle le véhicule circule, sachant que l'unité d'acquisition acquiert l'accélération à partir de l'accéléromètre et la vitesse angulaire à partir du compteur de vitesse angulaire.

8. Procédé d'estimation d'un profil de surface de route qui comprend :

une première étape consistant à acquérir une accélération verticale par rapport à une surface de route avec laquelle un véhicule est en contact et une vitesse angulaire autour d'un axe de tangage du véhicule ; et une deuxième étape consistant à calculer un déplacement vertical en intégrant l'accélération et à calculer un déplacement angulaire autour de l'axe de tangage en intégrant la vitesse angulaire ; **caractérisé par** une troisième étape consistant à prédire, sur la base d'un modèle de simulation, une évolution temporelle de variables d'état incluant des variables exprimant une inégalité sur une surface de route le long de laquelle le véhicule circule, des variables exprimant un mouvement haut-bas du véhicule, et des variables exprimant un mouvement rotatif autour de l'axe de tangage du véhicule ; une quatrième étape consistant à calculer, sur la base d'un modèle d'observation, l'accélération, la vitesse angulaire, le déplacement, et le déplacement angulaire à partir des variables d'état prédites à la troisième étape ; une cinquième étape consistant à mettre à jour les variables d'état en assimilant en termes de données l'accélération et la vitesse angulaire acquises à la première étape et le déplacement et le déplacement angulaire calculés à la deuxième étape avec l'accélération, la vitesse angulaire, le déplacement, et le déplacement angulaire calculés à la quatrième étape ; et une sixième étape consistant à estimer le profil de surface de route sur la base des variables exprimant l'inégalité de la surface de route, incluses dans les variables d'état.

9. Support d'enregistrement non transitoire enregistrant un programme lisible par ordinateur, qui, lorsqu'il est exécuté par un ordinateur prévu dans un dispositif d'estimation de profil de surface de route, fait en sorte que l'ordinateur fonctionne comme :

une unité d'acquisition qui acquiert une accélération verticale par rapport à une surface de route avec laquelle un véhicule est en contact et une vitesse angulaire autour d'un axe de tangage du véhicule ; et une première unité de calcul qui calcule un déplacement vertical en intégrant l'accélération et calcule un déplacement angulaire autour de l'axe de tangage en intégrant la vitesse angulaire ; **caractérisé par** une unité de prédiction qui prédit, sur la base d'un modèle de simulation, une évolution temporelle de variables d'état incluant des variables exprimant une inégalité sur une surface de route le long de laquelle le véhicule circule, des variables exprimant un mouvement haut-bas du véhicule, et des variables exprimant un mouvement rotatif autour de l'axe de tangage du véhicule ; une deuxième unité de calcul qui calcule, sur la base d'un modèle d'observation, l'accélération, la vitesse angulaire, le déplacement, et le déplacement angulaire à partir des variables d'état prédites par l'unité de prédiction ; une unité de mise à jour qui met à jour les variables d'état en assimilant en termes de données l'accélération et la vitesse angulaire acquises par l'unité d'acquisition et le déplacement et le déplacement angulaire calculés par la première unité de calcul avec l'accélération, la vitesse angulaire, le déplacement, et le déplacement angulaire calculés par la deuxième unité de calcul ; et une unité d'estimation qui estime le profil de surface de route sur la base des variables exprimant l'inégalité de la surface de route, incluses dans les variables d'état.

# FIG.1

```
                                   10                          1
                         ┌──────────────────┐
                         │  ROAD SURFACE    │
                         │     PROFILE      │
                         │   ESTIMATION     │
                         │     DEVICE       │
                         └──────────────────┘
                                  │
                                  │              N
                                 ⊗
                                  │
          30                      │
       ┌─────────────────────────┼──────────────┐  20
       │          ┌──────────────┴───────────┐
       │ VEHICLE  │                           │
       │          │      SMARTPHONE           │
       │          │      ┌───────────────┐    │
       │          │      │  ACCELE-      │    │  21
       │          │      │  ROMETER      │    │
       │          │      ├───────────────┤    │
       │          │      │  ANGULAR      │    │  22
       │          │      │  VELOCITY     │    │
       │          │      │  METER        │    │
       │          └──────┴───────────────┘    │
       └───────────────────────────────────────┘
```

# FIG.2

# FIG.3

M1

# FIG.4

START
PROCESSING

↓

ACQUIRE ACCELERATION AND
ANGULAR VELOCITY — S10

↓

CALCULATE DISPLACEMENT AND
ANGULAR DISPLACEMENT — S11

↓

PREDICT TIME EVOLUTION OF STATE
VARIABLES BASED ON HALF CAR
MODEL — S12

↓

CALCULATE ACCELERATION,
ANGULAR VELOCITY, DISPLACEMENT,
AND ANGULAR DISPLACEMENT BASED
ON OBSERVATION MODEL — S13

↓

UPDATE STATE VARIABLES
USING OPTIMAL KALMAN GAIN — S14

↓

END
PROCESSING

# FIG.5

```
        ┌─────────────────┐
        │     START       │
        │  PROCESSING     │
        └─────────────────┘
                 │
                 ▼
┌─────────────────────────────────────┐
│  SPECIFY SECTION TO BE SMOOTHED      │────  S20
└─────────────────────────────────────┘
                 │
                 ▼
┌─────────────────────────────────────┐
│    CALCULATE GAIN OF BACK            │
│        PROPAGATION                   │────  S21
└─────────────────────────────────────┘
                 │
                 ▼
┌─────────────────────────────────────┐
│    SMOOTH STATE VARIABLES            │
│       BASED ON GAIN                  │────  S22
└─────────────────────────────────────┘
                 │
                 ▼
┌─────────────────────────────────────┐
│   ESTIMATE ROAD SURFACE PROFILE      │────  S23
└─────────────────────────────────────┘
                 │
                 ▼
        ┌─────────────────┐
        │      END        │
        │  PROCESSING     │
        └─────────────────┘
```

**FIG.6**

EP 3 617 647 B1

FIG.7

FIG.8

EP 3 617 647 B1

# FIG.9

EP 3 617 647 B1

**FIG.10**

# FIG.11

EP 3 617 647 B1

# FIG.12

```
        ┌─────────────────┐
        │     START       │
        │   PROCESSING    │
        └────────┬────────┘
                 │
                 ▼
   ┌─────────────────────────────┐
   │  ACQUIRE ACCELERATION AND   │──── S30
   │     ANGULAR VELOCITY        │
   └──────────────┬──────────────┘
                  │
                  ▼
   ┌─────────────────────────────┐
   │  CALCULATE DISPLACEMENT AND │──── S31
   │     ANGULAR DISPLACEMENT    │
   └──────────────┬──────────────┘
                  │
                  ▼
   ┌─────────────────────────────┐
   │ PREDICT TIME EVOLUTION OF   │
   │ STATE VARIABLES BASED ON    │
   │ HALF CAR MODEL, GENERATE    │──── S32
   │ PLURALITY OF PARTICLES      │
   └──────────────┬──────────────┘
                  │
                  ▼
   ┌─────────────────────────────┐
   │   CALCULATE ACCELERATION,   │
   │ ANGULAR VELOCITY, DISPLACE- │
   │ MENT, AND ANGULAR DISPLACE- │──── S33
   │ MENT BASED ON OBSERVATION   │
   │ MODEL, CALCULATE WEIGHTING  │
   └──────────────┬──────────────┘
                  │
                  ▼
   ┌─────────────────────────────┐
   │  RESAMPLE PARTICLES USING   │
   │  CALCULATED WEIGHTING,      │──── S34
   │  UPDATE DISTRIBUTION OF     │
   │  STATE VARIABLES            │
   └──────────────┬──────────────┘
                  │
                  ▼
   ┌─────────────────────────────┐
   │ ESTIMATE ROAD SURFACE       │──── S35
   │ PROFILE                     │
   └──────────────┬──────────────┘
                  │
                  ▼
        ┌─────────────────┐
        │      END        │
        │   PROCESSING    │
        └─────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017040486 A

- WO 9824977 A1